# EUROPÄISCHE PATENTSCHRIFT

(11) **EP 2 856 123 B1**
(45) Veröffentlichungstag und Bekanntmachung des Hinweises auf die Patenterteilung: **15.08.2018**
(21) Anmeldenummer: 13723414.2
(22) Anmeldetag: 16.05.2013
(51) Int. Cl.: G01N 22/00

(54) **VORRICHTUNG ZUR MESSUNG DER DIELEKTRISCHEN UND/ODER MAGNETISCHEN EIGENSCHAFTEN EINER PROBE MITTELS EINER MIKROWELLEN-TRANSMISSIONSMESSUNG**
DEVICE FOR MEASURING THE DIELECTRIC AND/OR MAGNETIC PROPERTIES OF A SAMPLE BY MEANS OF MICROWAVE TRANSMISSION MEASUREMENT
DISPOSITIF DE MESURE DES PROPRIÉTÉS DIÉLECTRIQUES ET/OU MAGNÉTIQUES D'UN ÉCHANTILLON AU MOYEN DE LA MESURE DE LA TRANSMISSION DE MICRO-ONDES

(30) Priorität: 25.05.2012 DE 102012010255
(43) Veröffentlichungstag der Anmeldung: 08.04.2015
(73) Patentinhaber: Katz, Elisabeth, 72226 Simmersfeld (DE)
(72) Erfinder: KLEIN, Albert, 72226 Simmersfeld (DE)
(74) Vertreter: Schön, Thilo
(86) Internationale Anmeldenummer: PCT/EP2013/001446
(87) Internationale Veröffentlichungsnummer: WO 2013/174493

(56) Entgegenhaltungen:
- EP-A2- 0 990 887
- US-A1- 2011 267 074
- WU T Y ET AL: "The accurate measurement of microwave phase-shift using a dual-channel heterodyne system", MICROWAVE CONFERENCE, 2009. APMC 2009. ASIA PACIFIC, IEEE, PISCATAWAY, NJ, USA, 7. Dezember 2009 (2009-12-07), Seiten 1597-1600, XP031613309, ISBN: 978-1-4244-2801-4
- SEICHI OKAMURA ET AL: "A new microstripline-type moisture sensor for heavily wet tea leaves", MEASUREMENT SCIENCE AND TECHNOLOGY, IOP, BRISTOL, GB, Bd. 18, Nr. 4, 1. April 2007 (2007-04-01), Seiten 1022-1028, XP020118583, ISSN: 0957-0233, DOI: 10.1088/0957-0233/18/4/009

## Beschreibung

### Technisches Gebiet der Erfindung

Die Erfindung betrifft eine Vorrichtung zur Messung der dielektrischen und/oder magnetischen Eigenschaften einer Probe mittels einer Mikrowellen-Transmissionsmessung nach dem Oberbegriff des Anspruchs 1.

### Stand der Technik

In der Technik sind vielfältige Möglichkeiten bekannt, wie die dielektrischen Eigenschaften einer Probe, zu denen beispielsweise die Feuchtigkeit zählt, berührungslos gemessen werden können. Beispielsweise ist es möglich, die Probe mit einer Mikrowelle zu durchstrahlen und die gewünschten Informationen durch Vergleich der eingestrahlten Mikrowelle oder eines daraus abgeleiteten Signals mit der transmittierten Mikrowelle oder einem daraus abgeleiteten Signal zu erhalten. Hierbei kann sowohl die Absorption als auch die Phasenverschiebung bestimmt werden, so dass aus der entsprechenden Messung die vollständigen Informationen über das komplexe Epsilon der Probe erhältlich sind. Eine hierfür geeignete Vorrichtung weist ein Sendemodul und ein Empfangsmodul auf. Hierbei weist das Sendemodul wenigstens einen Synthesegenerator (auch Synthesizer genannt) zur Erzeugung eines Hochfrequenzsignals und eine mit dem Synthesegenerator verbundene Sendeantenne auf. Getaktet wird der Synthesegenerator von einem sogenannten Frequenznormal, welches ein Niederfrequenzsignal mit einer Frequenz von beispielsweise 10 MHz abgibt. Das von dem wenigstens einen Synthesegenerator erzeugte Hochfrequenzsignal wird auch dem Empfangsmodul, welches weiterhin eine Empfangsantenne aufweist, zugeleitet und dort mit der von der Empfangsantenne empfangenen Mikrowelle gemischt. Weiterhin ist eine Auswerteeinheit vorgesehen, welche als separates Modul ausgebildet sein kann. Dieser Auswerteeinheit wird das gemischte Signal zugeleitet.

Man unterscheidet grundsätzlich zwei Arten von Mess-Systemen, nämlich sogenannte homodyne Systeme, welche mit nur einer Frequenz arbeiten und nur einen Synthesegenerator aufweisen, und sogenannte heterodyne Systeme, welche mit zwei eng benachbarten Frequenzen arbeiten und zwei Synthesegeneratoren aufweisen. Beiden Systemen gleich ist, dass sie durch Vergleich von zwei Mikrowellen arbeiten, wobei eine die Probe passiert und hierdurch eine Dämpfung und/oder eine Phasenverschiebung erfährt, während die andere Mikrowelle nicht durch die Probe durchtritt und als Referenz dient. Dies macht es notwendig, eine Hochfrequenz-Referenzleitung zwischen dem Sendemodul und dem Empfangsmodul vorzusehen (dies gilt sowohl für homodyne Systeme als auch für heterodyne Systeme). Unter Laborbedingungen ist das Vorsehen einer solchen Hochfrequenz-Referenzleitung in der Regel unproblematisch, da hier einerseits keine großen örtlichen Distanzen überwunden werden müssen, und andererseits konstante Laborbedingungen, insbesondere eine im Wesentlichen konstante Temperatur, herrschen.

Wird eine solche Vorrichtung jedoch im industriellen Bereich eingesetzt, so ist das Vorsehen einer solchen Hochfrequenz-Referenzleitung jedoch mit einigen Problemen und Nachteilen behaftet, insbesondere da sich die Temperaturabhängigkeit der Wellenausbreitungsgeschwindigkeit in einem Koaxialkabel mit zunehmender Frequenz der Welle auf die Phasenverschiebung verstärkt auswirkt. Das bedeutet, dass bei nicht-konstanten Umweltbedingungen, insbesondere Temperaturen, erhebliche Phasenverschiebungen in der Hochfrequenz-Referenzleitung und den Antennenzuleitungen auftreten können, welche das Messergebnis verfälschen. Zudem können in industriellen Anwendungen das Sendemodul und das Empfangsmodul recht weit voneinander beabstandet sein, was dieses Problem noch verschärft, insbesondere dann, wenn eine solche Vorrichtung ganz oder teilweise im Freien installiert ist, so dass sie der Sonneneinstrahlung ausgesetzt sein kann.

EP 0 990 887 A2 offenbart eine Vorrichtung zur Mikrowellen-Transmissionsmessung, bei der sich auf Sendeseite und Empfangsseite jeweils ein Synthesegenerator zur Erzeugung eines Hochfrequenzsignals befindet. Ein Zwischenfrequenzsignal wird durch einen Mischer erzeugt, wobei die Frequenz durch ein Frequenznormal vorgegeben ist. Zwischen der Sendeseite und der Empfangsseite ist nur eine Niederfrequenzleitung für das Signal vom Frequenznormal nötig.

US 2011/026074 A1, WU T Y ET AL: "The accurate measurement of microwave phaseshift using a dual-channel heterodyne system", MICROWAVE CONFERENCE, 2009. APMC 2009. ASIA PACIFIC, IEEE, PISCATAWAY, NJ, USA, 7. Dezember 2009 (2009-12-07), Seiten 1597-1600, ISBN: 978-1-4244-2801-4 und SEICHI OKAMURA ET AL: "A new microstripline-type moisture sensor for heavily wet tea leaves", MEASUREMENT SCIENCE AND TECHNOLOGY, IOP, BRISTOL, GB, Bd. 18, Nr. 4, 1. April 2007 (2007-04-01), Seiten 1022-1028, ISSN: 0957-0233, DOI: 10.1088/0957-0233/18/4/009 offenbaren Vorrichtungen zur Mikrowellen-Transmissionsmessung unter Verwendung eines Zwischenfrequenzsignals.

### Gegenstand der Erfindung

Hiervon ausgehend stellt sich die vorliegende Erfindung die Aufgabe, eine gattungsgemäße Vorrichtung dahingehend zu verbessern, dass sie insbesondere für industrielle Anwendungen besser geeignet ist und auch bei schwankenden Umweltbedingungen konstant gute Messergebnisse liefert.

Diese Aufgabe wird durch eine Vorrichtung mit den Merkmalen der Ansprüche 1 oder 2. gelöst. Zudem betrifft die vorliegende Erfindung auch ein Verfahren gemäß Anspruch 3. Das erfindungsgemäße Vorsehen eines empfangsseitigen Synthesegenerators macht den Einsatz der oben erwähnten, problematischen Hochfrequenz-Referenzleitung überflüssig. Solche Niederfrequenz-Signalleitungen sind gegen die oben erwähnten Umwelteinflüsse auch bei großer Länge nahezu unempfindlich, so dass kein Nachkalibrieren auch bei stark schwankenden Umwelteinflüssen, insbesondere einer sich stark verändernden Temperatur, notwendig ist. Bevorzugte Ausführungsformen der Erfindung ergeben sich aus den nun mit Bezug auf die Figuren näher erläuterten Ausführungsbeispielen. Hierbei zeigen:

### Kurzbeschreibung der Zeichnungen

- Figur 1: die Schaltskizze eines ersten Ausführungsbeispiels der Erfindung,
- Figur 2: eine Schaltskizze eines zweiten Ausführungsbeispiels der Erfindung, wobei das Messprinzip dasselbe wie im ersten Ausführungsbeispiel ist,
- Figur 3: ein Schaltbild eines heterodyn arbeitenden Systems gemäß dem Stand der Technik,
- Figur 4: eine alternative Schaltskizze,
- Figur 5: eine nicht beanspruchte Schaltskizze,
- Figur 6: eine nicht beanspruchte Schaltskizze,
- Figur 7: eine erste Anwendung der Erfindung und
- Figur 8: eine zweite Anwendung der Erfindung.

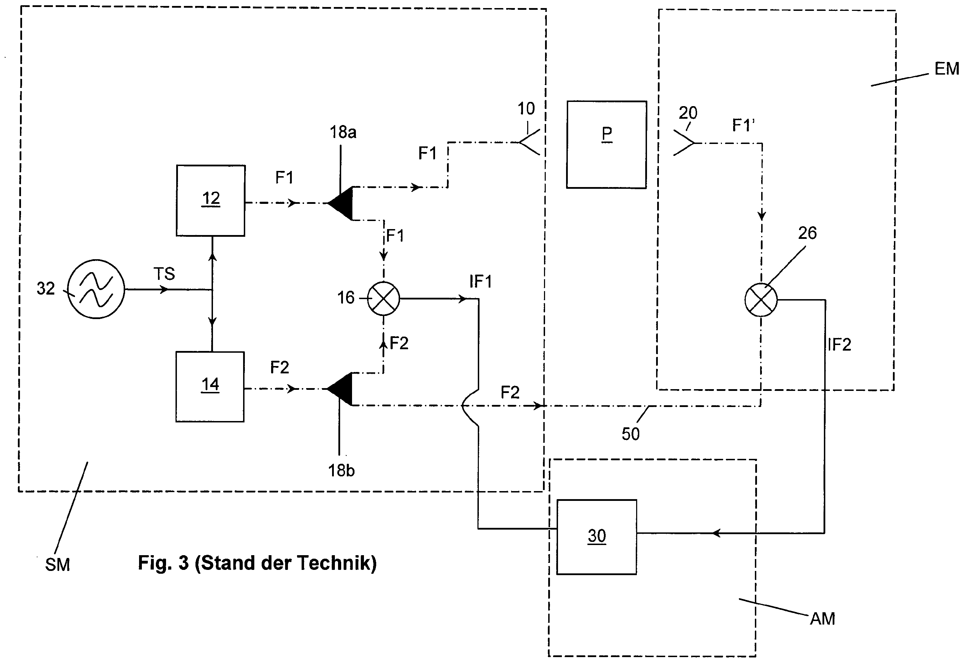

Um die Erfindung besser verstehen zu können, wird zunächst mit Bezug auf die Figur 3 im Detail auf den Stand der Technik eingegangen, von dem die vorliegende Erfindung ausgeht:

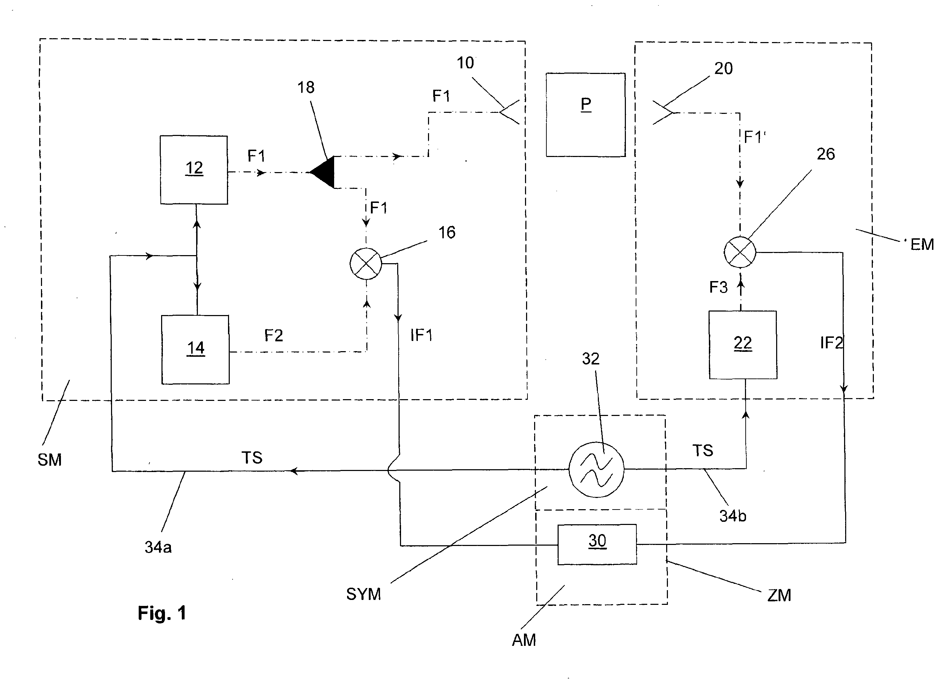

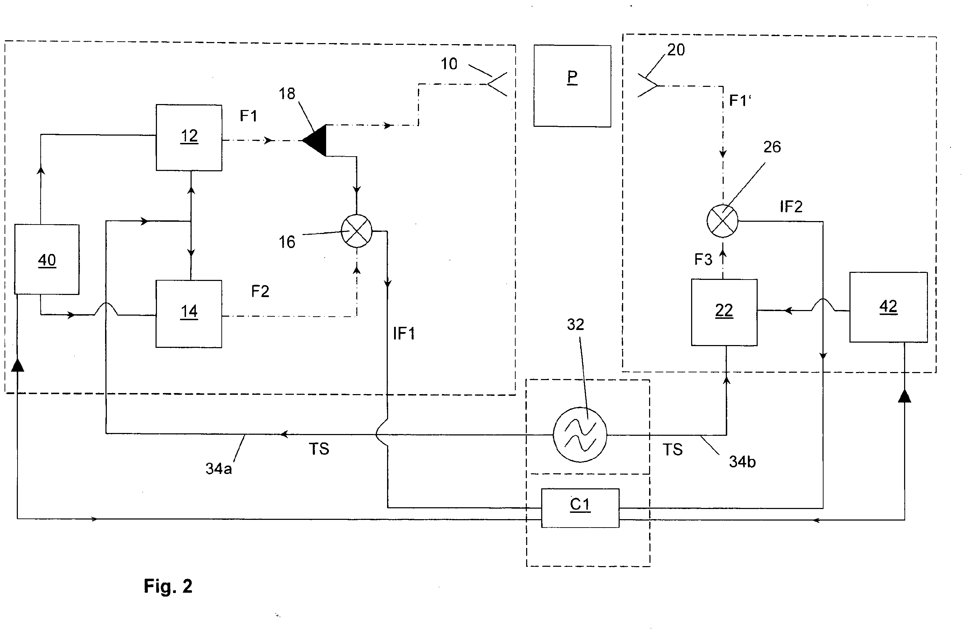

Die Figur 3 zeigt, wie dies bereits erwähnt wurde, eine Vorrichtung zur Messung der dielektrischen und/oder magnetischen Eigenschaften einer Probe P, wobei die Vorrichtung als heterodynes Mess-System ausgebildet ist. Dieses System kann als aus drei Modulen bestehend betrachtet werden, nämlich aus einem Sendemodul SM, aus einem Empfangsmodul EM und aus einer Auswerteeinheit. Hierbei sind Sendemodul SM und Empfangsmodul EM in der Regel auch räumlich voneinander getrennt, die Auswerteeinheit kann in Form eines Auswertemoduls AM ebenfalls als physikalisch getrenntes Modul ausgebildet, aber auch in eines der beiden Module, beispielsweise das Sendemodul SM, integriert sein. Funktional kann man diese drei Elemente jedoch stets als separate Module betrachten. Eine Sendeantenne 10 und eine Empfangsantenne 20 definieren eine Transmissionsmessstrecke, in welche eine Probe P einbringbar ist. Unter "Antenne" wird hier jedes Element verstanden, welches zum Senden beziehungsweise zum Empfangen einer frei propagierenden oder in einem Wellenleiter geführten Mikrowelle geeignet ist. Hierbei kann die Antenne auch integral mit einem anderen Bauteil ausgebildet sein.
Für das Folgende gelten folgende Definitionen und Konventionen: Als "Hochfrequenzsignal" oder "Mikrowelle" werden elektromagnetische Wellen bezeichnet, die in einem Leiter oder frei propagieren, und eine Frequenz zwischen 800 MHz und 30 GHz aufweisen. Für solche Frequenzen geeignete Hochfrequenz-Signalleitungen (Mikrowellenleiter) sind in der Technik bekannt. In den Figuren (dies gilt sowohl für die Figur 3 des Standes der Technik als auch für die Figuren 1 und 2) sind die Hochfrequenz-Signalleitungen strichpunktiert dargestellt. Unter "Niederfrequenz" werden hier alle elektromagnetischen Wellen oder Signale mit einer Frequenz unter 200 MHz verstanden. Signalleitungen zur Übertragung von solchen niederfrequenten Signalen werden hier als Niederfrequenz-Signalleitungen bezeichnet und sind in den Zeichnungen als durchgezogene Linien dargestellt. Nicht alle Signalleitungen (seien es Hochfrequenz-Signalleitungen oder Niederfrequenz-Signalleitungen) haben in der Beschreibung und den Zeichnungen der Übersichtlichkeit halber einen eigenen Namen / ein eigenes Bezugszeichen erhalten. Körperlich ausgebildet sind sowohl die Hochfrequenz-Signalleitungen als auch die Niederfrequenz-Signalleitungen in der Regel als Koaxialkabel, wobei aus Kostengründen für die Hochfrequenz-Signalleitungen in der Regel Koaxialkabel mit höherer Güte als für die Niederfrequenz-Signalleitungen verwendet werden; dies ist jedoch nicht zwingend, es wäre auch möglich, für alle Signalleitungen hinreichend hochwertige Koaxialkabel zu verwenden. Insofern sind die Begriffe "Hochfrequenz-Signalleitung" und "Niederfrequenz-Signalleitung" in erster Linie funktional zu verstehen.

Das Sendemodul SM weist neben der Sendeantenne 10 zwei sendeseitige Synthesegeneratoren 12 und 14, zwei Leistungsteiler 18a, 18b, einen sendeseitigen Mischer 16 und ein Frequenznormal 32 auf. Das Empfangsmodul EM weist neben einer Empfangsantenne 20 lediglich einen empfangsseitigen Mischer 26 auf. Das Auswertemodul AM besteht aus einem zentralen Prozessor 30 als Auswerteeinheit. Sendemodul SM und Empfangsmodul EM sind mittels einer Hochfrequenz-Referenzleitung 50 verbunden. Das Sendemodul SM und das Empfangsmodul EM sind mit dem Auswertemodul AM (d. h. mit dem zentralen Prozessor 30) jeweils mittels einer Niederfrequenz-Signalleitung (IF1, IF2) verbunden. Die Funktionsweise ist wie folgt:
Das Frequenznormal 32 taktet die beiden sendeseitigen Synthesegeneratoren 12, 14, wobei die Taktfrequenz beispielsweise 10 MHz betragen kann. Der erste sendeseitige Synthesegenerator 12 erzeugt ein erstes Hochfrequenzsignal F1 mit einer ersten Hochrequenz von beispielsweise 3 GHz und der zweite sendeseitige Synthesegenerator 14 erzeugt ein zweites Hochfrequenzsignal F2 mit einer hierzu leicht verschiedenen Hochfrequenz von beispielsweise 3,001 GHz. Das erste Hochfrequenzsignal F1 des ersten sendeseitigen Synthesegenerators 12 wird einem ersten Leistungsteiler 18a zugeführt, dessen erster Ausgang mit der Sendeantenne 10 und dessen zweiter Ausgang mit dem sendeseitigen Mischer 16 verbunden ist. Der zweite sendeseitige Synthesegenerator 14 ist mit dem zweiten Leistungsteiler 18b verbunden, dessen Ausgänge mit dem sendeseitigen Mischer 16 und über die Hochfrequenz-Referenzleitung 50 mit dem empfangsseitigen Mischer 26 verbunden sind. Der zweite Eingang des empfangseitigen Mischers 22 ist mit der Empfangsantenne 20 verbunden.

Somit erzeugt der sendeseitige Mischer 16 ein erstes Zwischenfrequenzsignal IF1 mit einer ersten Zwischenfrequenz, welche die Differenz zwischen der ersten Hochfrequenz (also der Frequenz der gesendeten Mikrowelle) und der zweiten Hochfrequenz ist, im gewählten Ausführungsbeispiel also 1 MHz beträgt. Der empfangsseitige Mischer 26 wiederum erzeugt ein zweites Zwischenfrequenzsignal IF2, welches die Differenz der empfangenen Mikrowelle (dieses Signal wird hier als F1' bezeichnet) und dem zweiten Hochfrequenzsignal des zweiten sendeseitigen Synthesegenerators 14 ist. Die Frequenz von F1 und F1' ist hierbei gleich, da die Transmission durch die Probe P zwar Phase und Amplitude ändert, nicht jedoch die Frequenz. Aus diesem Grunde haben die beiden Zwischenfrequenzsignale IF1 und IF2 auch dieselbe Zwischenfrequenz, hier nämlich 1 MHz. Aus dem Vergleich des ersten Zwischenfrequenzsignals IF1 mit dem zweiten Zwischenfrequenzsignal IF2 kann in bekannter Art und Weise sowohl auf die Phasenverschiebung als auch auf die Dämpfung, welche die von der Sendeantenne 10 abgestrahlte Mikrowelle bei Durchstrahlung der Probe P erfährt, geschlossen werden, woraus wiederum auf die dielektrischen Eigenschaften der Probe geschlossen werden kann.. Die entsprechenden Berechnungen werden vom Auswertemodul AM, nämlich vom zentralen Prozessor 30 durchgeführt.

### Beschreibung bevorzugter Ausführungsformen

Mit Bezug auf die Figur 1 wird nun eine erfindungsgemäße Vorrichtung beschrieben, welche ebenso wie die eben beschriebene Vorrichtung des Standes der Technik als heterodynes System ausgebildet ist. Wie die eben beschriebene Vorrichtung auch, kann man die erfindungsgemäße Vorrichtung als aus drei Modulen bestehend betrachten, nämlich einem Sendemodul SM, einem Empfangsmodul EM und einem Zentralmodul ZM, welches sowohl das Auswertemodul AM - also die Auswerteeinheit - als auch ein Synchronisationsmodul SYM, welches es im Stand der Technik so nicht gibt - enthält. Auch hier müssen die drei Module nicht zwingend als örtlich voneinander getrennte Module ausgebildet sein, für das weitere Verständnis wird jedoch an der oben gewählten Terminologie festgehalten. Das Sendemodul SM und das Empfangsmodul EM sind als körperlich getrennte Module ausgebildet. Das Zentralmodul ZM kann in eins der beiden Module integriert sein.
Wie im Stand der Technik auch, weist das Sendemodul SM zwei sendeseitige Synthesegeneratoren 12 und 14 auf, welche jeweils ein Hochfrequenzsignal F1 beziehungsweise F2 erzeugen, wobei die Hochfrequenzen leicht verschieden voneinander sind, beispielsweise kann auch hier die erste Hochfrequenz 3 GHz und die zweite Hochfrequenz 3,001 GHz betragen. Wie oben mit Bezug auf den Stand der Technik beschrieben, speist auch hier der erste sendeseitige Synthesegenerator 12 sein Hochfrequenzsignal F1 in einen Leistungsteiler 18, welcher wiederum mit einem sendeseitigen Mischer 16 und der Sendeantenne 10 verbunden ist. Der zweite sendeseitige Synthesegenerator 14 speist das von ihm erzeugte zweite Hochfrequenzsignal F2 unmittelbar in den sendeseitigen Mischer 16, welcher, wie im Stand der Technik auch, mit dem Auswertemodul AM, nämlich mit dem zentralen Prozessor 30 verbunden ist.

Im Gegensatz zum Stand der Technik ist das Sendemodul SM nicht über eine Hochfrequenz-Referenzleitung mit dem Empfangsmodul EM verbunden, weshalb es auch keinen zweiten Leistungsteiler gibt. Stattdessen ist im Empfangsmodul EM ein empfangsseitiger Synthesegenerator 22 vorgesehen, welcher dieselbe Hochfrequenz wie der zweite sendeseitige Synthesegenerator 14, im gewählten Ausführungsbeispiel also 3,001 GHz, erzeugt. Dieser empfangsseitige Synthesegenerator 22 speist das von ihm erzeugte dritte Hochfrequenzsignal F3 in den empfangsseitigen Mischer 26, dessen zweiter Eingang mit der Empfangsantenne 20 verbunden ist, so dass es das durch die Probe P transmittierte erste Hochfrequenzsignal F1' empfängt.

Der sendeseitige Mischer 16 erzeugt, wie im Stand der Technik auch, eine erstes Zwischenfrequenzsignal IF1, ebenso erzeugt der empfangsseitige Mischer 26 ein zweites Zwischenfrequenzsignal IF2, wobei die beiden Zwischenfrquenzen gleich sind, im beschriebenen Ausführungsbeispiel nämlich 1 MHz betragen. Diese beiden Zwischenfrequenzsignale IF1 und IF2 werden, ebenfalls wie im Stand der Technik, dem Auswertemodul AM, d. h. dem zentralen Prozessor 30, zugeführt. Damit man aus der Phasenverschiebung zwischen dem ersten Zwischenfrequenzsignal IF1 und dem zweiten Zwischenfrequenzsignal IF2 eine relevante Aussage über die Phasenverschiebung, welche das erste Hochfrequenzsignal F1 beim Durchtritt durch die Probe P erfährt, ableiten kann, müssen sämtliche Synthesegeneratoren 12, 14 und 22 zueinander synchronisiert sein. Für diese Synchronisation sorgt das Synchronisationsmodul SYM, d. h. das Frequenznormal 32, welches mit einer sendeseitigen Niederfrequenz-Synchronisations-Signalleitung 34a mit den beiden sendeseitigen Synthesegeneratoren 12, 14 und mit einer empfangsseitigen Niederfrequenz-Synchronisations-Signalleitung 34b mit dem empfangsseitigen Synthesegenerator 22 verbunden ist und ein Taktsignal TS aussendet, mit dem die Synthesegeneratoren phasenstarr reproduzierbar gekoppelt werden. Das "Herz" eines solchen Frequenznormals ist in der Regel ein Schwingquarz, dessen Resonanzfrequenz als Normalfrequenz benutzt wird. Typischerweise beträgt diese Normalfrequenz zwischen 1 und 30 MHz, insbesondere 10 MHz, wie in diesem Ausführungsbeispiel gewählt. Beide Niederfrequenz-Synchronisations-Signalleitungen 34a, 34b, sind Niederfrequenz-Signalleitungen, welche vorzugsweise körperlich identisch, insbesondere mit gleicher Länge und mit identischem Aufbau ausgebildet sind. Dies macht den Einsatz einer das Sendemodul SM und Empfangsmodul EM verbindende Hochfrequenz-Referenzleitung überflüssig, was zur erfindungsgemäßen Verbesserung führt.

Beim eben beschriebenen Ausführungsbeispiel können die von den Synthesegeneratoren 12, 14, 22 erzeugten Hochfrequenzsignale nicht verändert werden. Häufig ist es jedoch erwünscht, dass mit verschiedenen Hochfrequenzen gemessen wird, wobei stets gilt, dass die zweite Hochfrequenz des zweiten sendeseitigen Synthesegenerators 14 und die dritte Hochfrequenz des empfangsseitigen Synthesegenerators 22 identisch sind und diese beiden zweiten und dritten Hochfrequenzen gegenüber der ersten Hochfrequenz des ersten sendeseitigen Synthesegenerators 12 leicht verschieden sind. In diesem Fall ist es notwendig, dass die Synthesegeneratoren 12, 14, 22 durch einen Controller angesteuert werden können. Grundsätzlich kann diese Aufgabe vom zentralen Prozessor 30 übernommen werden, wobei es bei großen geometrischen Abständen jedoch zu bevorzugen ist, dass die Ansteuerung nicht direkt über den zentralen Prozessor, sondern jeweils über einen sendeseitigen Controller 40 und einen empfangsseitigen Controller 42 erfolgt, welche wiederum vom zentralen Prozessor 30 angesteuert werden (Figur 2).

Da es für den Erfolg der Erfindung natürlich unerlässlich ist, dass die Synthesegeneratoren eine zueinander bekannte Phasenlage haben, muss ihre Kopplung an das Frequenznormal nicht nur phasenstarr, sondern auch reporduzierbar sein.

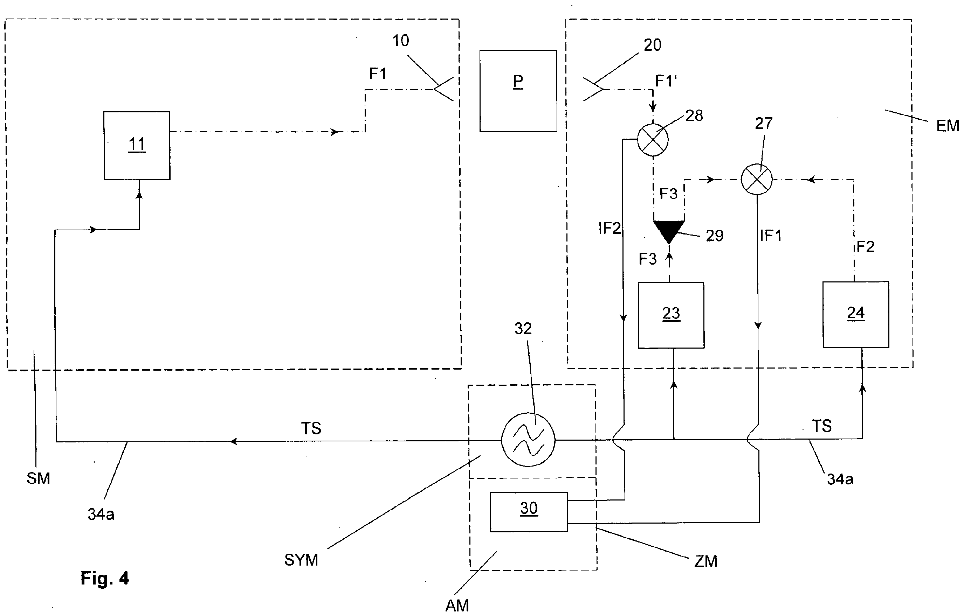

Das bedeutet, dass beim Einschalten oder bei Änderung der Frequenz sich bei alle Synthesegeneratoren stets dieselbe Phasenlage einstellt. Diese notwendige Eigenschaft zeigen jedoch eine Vielzahl von im Stand der Technik bekannten Synthesegeneratoren, so dass es zur Erzielung der Reproduzierbarkeit keiner zusätzlichen Maßnahmen bedarf.
Mittels der phasenstarr reproduzierbar gekoppelten Synthesegeneratoren lassen sich beide Zwischenfrequenzen IF1 und IF2 auch auf der Empfängerseite generieren, so dass das Verbindungskabel für dieses Signal zwischen dem Sendemodul SM und dem Auswertemodul AE entfallen kann. Ein konkretes Ausführungsbeispiel ist in Figur 4 gezeigt: In diesem Fall weist das Sendemodul SM nur einen Synthesegenerator 11 auf. Alle weiteren Bauelemente sind in das Empfangsmodul EM integriert, welches somit einen ersten und einen zweiten Synthesegenerator 23, 24 aufweist, wobei der zweite Synthesegenerator 24 ein zweites Hochfrequenzsignal F2 erzeugt, welches dieselbe Hochfrequenz hat wie das erste Hochfrequenzsignal F1 des sendeseitige Synthesegenerators 11 (beispielsweise wieder 3 GHz), während der erste Synthesegenerator 23 (wie im oben beschriebenen Ausführungsbeispiel auch) ein drittes Hochfrequenzsignal F3 mit einer hierzu leicht verschiedenen Hochfrequenz (beispielsweise wieder 3,001 GHz) erzeugt. Das erste Zwischenfrequenzsignal IF1 wird durch Mischen des zweiten Hochfrequenzsignals F2 mit dem dritten Hochfrequenzsignal F3 erzeugt, wozu der erste empfangsseitige Mischer 27 dient, dessen einer Eingang über einen Leistungsteiler 29 mit dem ersten empfangsseitigen Synthesegenerator 23 verbunden ist. Das zweite Zwischenfrequenzsignal IF2 wird wie oben beschrieben erzeugt, wofür der zweite empfangsseitige Mischer 28 dient, der dem empfangsseitigen Mischer 26 des ersten Ausführungsbeispiels entspricht. Wie im oben beschriebenen Ausführungsbeispiel auch, werden alle Synthesegeneratoren 11, 23, 24 von dem Frequenznormal 32 phasenstarr getaktet.

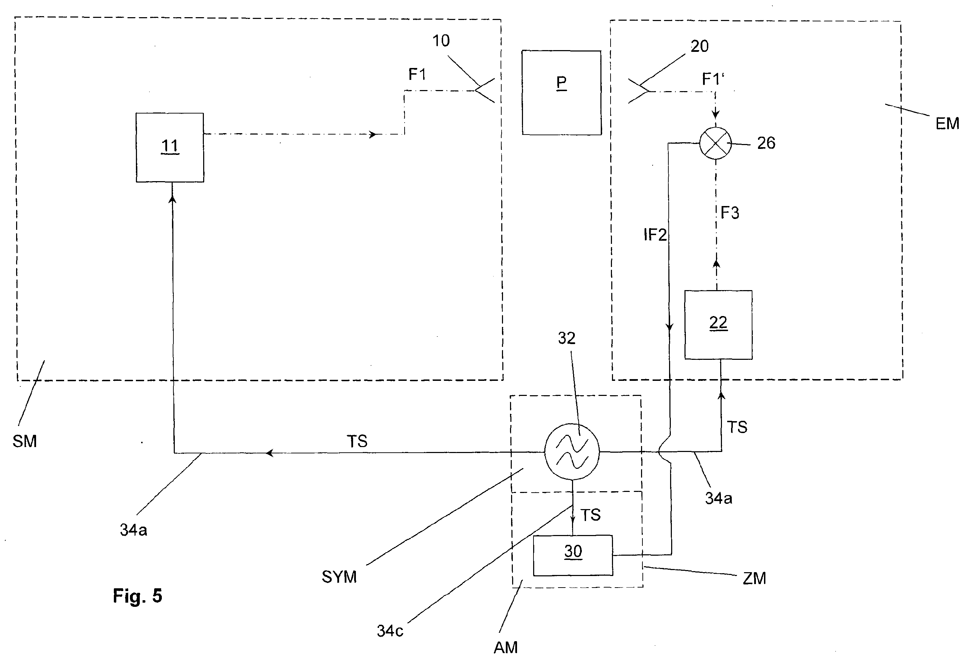

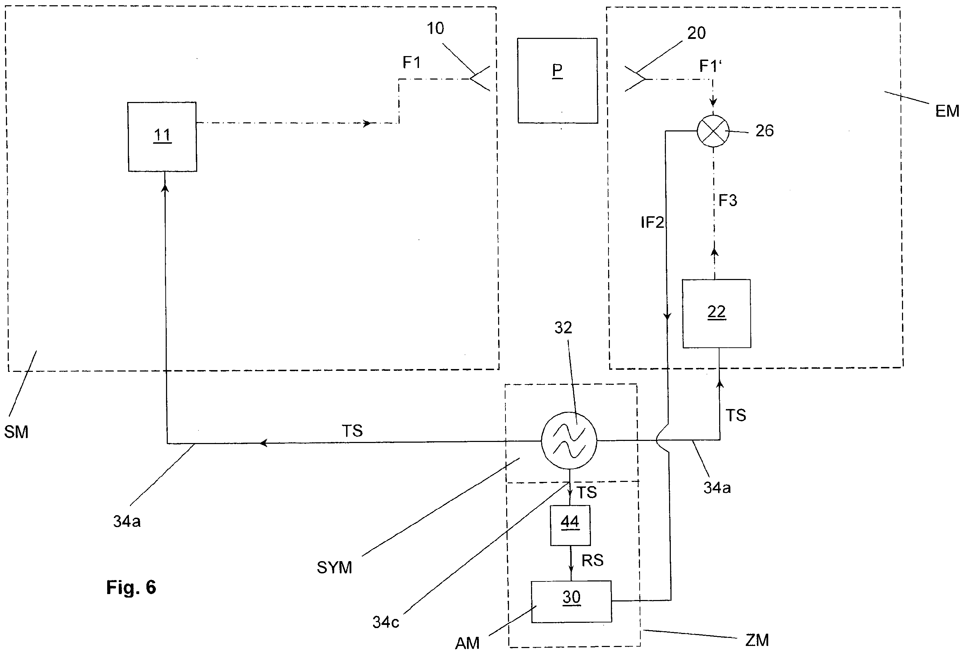

Die Figur 5 zeigt ein ein nicht beanspruchtes Beispiel, bei dem nur ein sendeseitiger Frequenzgenerator 11 zur Erzeugung eines ersten Hochfrequenzsignals F1 und nur ein empfangsseitiger Frequenzgenerator 22 zur Erzeugung eines weiteren Hochfrequenzsignals, welches der Konsistenz halber hier als drittes Hochfrequenzsignal F3 bezeichnet wird, vorgesehen sind. Hier dient als Referenzsignal (dies ist in den vorherigen Ausführungsbeispielen das erste Zwischenfrequenzsignal IF1) direkt das Taktsignal TS des Synchronisationsmoduls oder gegebenenfalls ein unmittelbar aus diesem abgeleitetes Signal. Soll das Taktsignal TS unmittelbar als Referenzsignal dienen, wie dies im Ausführungsbeispiel der Figur 5 gezeigt ist und wozu eine weitere Niederfrequenz-Synchronisations-Signalleitung 34c vorgesehen ist, welches das Frequenznormal 32 mit dem zentralen Prozessor verbindet, so muss die Frequenz des zweiten Zwischenfrequenzsignals IF2 (des Mischsignals aus F3 und F1') gleich zu der Frequenz des Taktsignals TS sein. Beträgt die Frequenz des Taktsignals TS auch hier 10 MHz, so könnte beispielsweise die Frequenz des ersten Hochfrequenzsignals F1 3 GHz und die Frequenz des drittes Hochfrequenzsignal F3 3,01 GHz betragen. Dieses Ausführungsbeispiel führt zu einer Vereinfachung der Schaltung.
Diese Vorgehensweise lässt sich verallgemeinern: Die Frequenz des vom Empfangsmodul kommenden Zwischenfrquenzsignals IF2 muß nicht identisch mit der Frequenz des Taktsignals TS des Frequenznormals 32 sein. Es ist lediglich nochtwendig, dass diese beiden Signale zueinander phasenstarr reproduzierbar gekoppelt sein. Es ist, wie dies in Figur 6 gezeigt ist, beispielsweise möglich, zwischen dem Frequenznormal 32 und dem als Auswerteeinheit dienenden zentralen Prozessor 30 einen Frequenzwandler, insbesondere einen Niederfrequenz-Synthesegenerator 44 vorzusehen, welcher ein Referenzsignal RS erzeugt, dessen Frequenz der Frequenz des zweiten Zwischensignals IF2 entspricht, also beispielsweise 1 MHz bei f(F1) = 3 GHz und f(F3) = 3,001 GHz. Somit entspricht das Ausführungsbeispiel der Figur 6 im Wesentlichen dem Ausführungsbeispiel der Figur 4 mit dem Unterschied, dass das aus den zwei Hochfrequenzsignalen F2 und F3 gemischte, als Referenz dienende erste Zwischenreferenzsignal IF1 durch das unmittelbar von dem Niederfrequenz-Synthesegenerator 44 erzeugte, ungemischte Referenzsignal RS ersetzt wird.

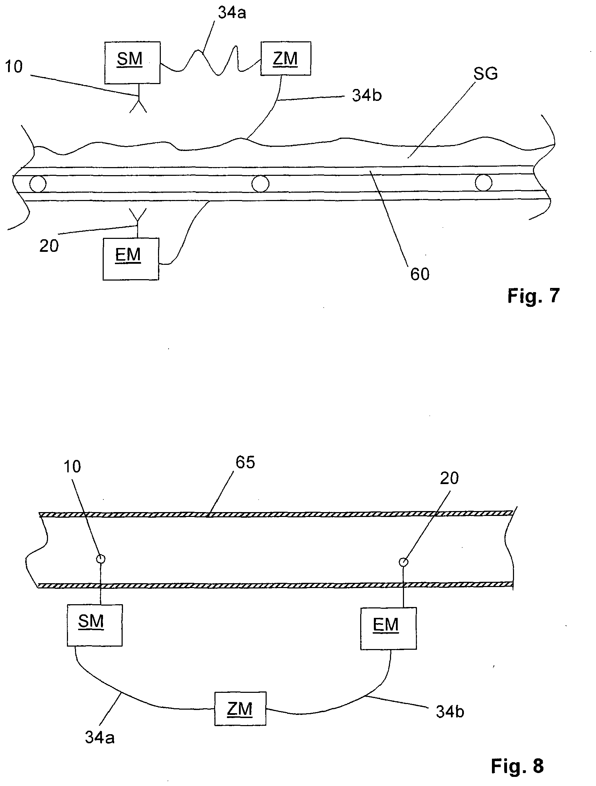

Wie dies bereits erwähnt wurde zeigen sich die Vorteile der erfindungsgemäßen Verbesserung insbesondere beim industriellen Einsatz einer solchen Vorrichtung, beispielsweise bei der Online-Messung von auf einem Förderer, beispielsweise einem Förderband 60 geförderten Schüttgütern SG wie Kohle oder Erz (Fig. 7) oder bei der Online-Messung von durch ein Rohr (65) strömender Flüssigkeit (Fig. 8). Auch die Messung in einem Behälter ist möglich.

### Bezugszeichenliste

- 10: Sendeantenne
- 11: sendeseitiger Synthesegenerator
- 12: erster sendeseitiger Synthesegenerator
- 14: zweiter sendeseitiger Synthesegenerator
- 16: sendeseitiger Mischer
- 18: Leistungsteiler
- 18a: erster Leistungsteiler
- 18b: zweiter Leistungsteiler
- 20: Empfangsantenne
- 22: empfangsseitiger Synthesegenerator
- 23: erster empfangsseitiger Synthesegenerator
- 24: zweiter empfangsseitiger Synthesegenerator
- 26: empfangsseitiger Mischer
- 27: erster empfangsseitiger Mischer
- 28: zweiter empfangsseitiger Mischer
- 29: Leistungsteiler
- 30: zentraler Prozessor (Auswerteeinheit)
- 32: Frequenznormal
- 34a: sendeseitige Niederfrequenz-Synchronisations-Signalleitung
- 34b: empfangsseitige Niederfrequenz-Synchronisations-Signalleitung
- 34c: weitere Niederfrequenz-Synchronisations-Signalleitung
- 40: sendeseitiger Controller
- 42: empfangsseitiger Controller
- 44: Niederfrequenz-Synthesegenerator
- 50: Hochfrequenz-Referenzleitung
- 60: Förderband
- 65: Rohr
- F1: erstes Hochfrequenzsignal mit erster Frequenz
- F2: zweites Hochfrequenzsignal mit zweiter Frequenz
- F3: drittes Hochfrequenzsignal mit dritter Frequenz
- IF1: erstes Zwischenfrequenzsignal mit erster Zwischenfrequenz
- IF2: zweites Zwischenfrequenzsignal mit zweiter Zwischenfrequenz
- TS: Taktsignal
- RF: Referenzsignal
- SM: Sendemodul
- EM: Empfangsmodul
- AE: Auswerteeinheit
- SYM: Synchronisationsmodul
- ZM: Zentralmodul
- SG: Schüttgut

## Patentansprüche

1. Vorrichtung zur Messung der dielektrischen und/oder magnetischen Eigenschaften einer Probe (P) mittels einer Mikrowellen-Transmissionsmessung mit:
einer Sendeantenne (10) und einer Empfangsantenne (20), welche eine Transmissionsmessstrecke definieren, in welcher die zu messende Probe (P) positionierbar ist,
einem Sendemodul (SM), welches zwei sendeseitige Synthesegeneratoren (12, 14) zur Erzeugung jeweils eines Hochfrequenzsignals (F1, F2) mit einer Frequenz zwischen 800 MHz und 30 GHz und einen sendeseitigen Mischer (16) aufweist,
einem mittels einer sendeseitigen Niederfrequenz-Synchronisations-Signalleitung (34a) mit den sendeseitigen Synthesegeneratoren (12, 14) verbundenen Frequenznormal (32), an welches die sendeseitigen Synthesegeneratoren (12, 14) phasenstarr reproduzierbar gekoppelt sind, und
einer Auswerteeinheit, welche zumindest mittelbar mit den sendeseitigen Synthesegeneratoren (12, 14) und der Empfangsantenne (20) verbunden ist,
wobei die Vorrichtung dazu eingerichtet ist die Hochfrequenzsignale (F1, F2) der beiden sendeseitigen Synthesegeneratoren (12, 14) dem sendeseitigen Mischer (16) zuzuführen, dessen aus diesen beiden Hochfrequenzsignalen (F1, F2) erzeugtes Zwischenfrequenzsignal (IF1) der Auswerteeinheit zuzuführen, und
das Hochfrequenzsignal des ersten sendeseitigen Synthesegenerators (12) weiterhin der Sendeantenne zuzuführen, wobei weiterhin ein vom Sendemodul (SM) örtlich beabstandetes Empfangsmodul (EM) mit einem empfangsseitigen Synthesegenerator (22) und einem empfangsseitigen Mischer (26) vorgesehen ist, wobei der empfangsseitige Synthesegenerator (22) mittels einer empfangsseitigen Niederfrequenz-Synchronisations-Signalleitung (34b) mit dem Frequenznormal (32) verbunden ist und an dieses phasenstarr reproduzierbar gekoppelt ist und weiterhin zumindest mittelbar mit der Auswerteeinheit verbunden ist und
wobei die Vorrichtung dazu eingerichtet ist das von der Empfangsantenne (20) empfangene Hochfrequenzsignal (F1') und das vom empfangsseitigen Synthesegenerator (22) erzeugte Hochfrequenzsignal dem empfangsseitigen Mischer (26) zuzuführen, dessen aus diesen beiden Hochfrequenzsignalen erzeugtes Zwischenfrequenzsignal (IF2) der Auswerteeinheit zuzuführen wobei der zweite sendeseitige Synthesegenerator (14) und der empfangsseitige Synthesegenerator (22) dazu eingerichtet sind dieselbe Hochfrequenz zu erzeugen und der erste sendeseitige Synthesegenerator (12) dazu eingerictet ist eine hiervon verschiedene Hochfrequenz zu erzeugen.

2. Vorrichtung zur Messung der dielektrischen und/oder magnetischen Eigenschaften einer Probe (P) mittels einer Mikrowellen-Transmissionsmessung mit:
einer Sendeantenne (10) und einer Empfangsantenne (20), welche eine Transmissionsmessstrecke definieren, in welcher die zu messende Probe (P) positionierbar ist,
einem Sendemodul (SM), welches einen sendeseitigen Synthesegenerator (11) zur Erzeugung eines Hochfrequenzsignals (F1) mit einer Frequenz zwischen 800 MHz und 30 GHz aufweist,
einem mittels einer sendeseitigen Niederfrequenz-Synchronisations-Signalleitung (34a) mit dem sendeseitigen Synthesegenerator (11) verbundenen Frequenznormal (32), an welches der sendeseitige Synthesegenerator (11) phasenstarr reproduzierbar gekoppelt ist, und
einer Auswerteeinheit, welche zumindest mittelbar mit dem sendeseitigen Synthesegenerator (11) und der Empfangsantenne (20) verbunden ist,
wobei die Vorrichtung dazu eingerichtet ist das Hochfrequenzsignal des sendeseitigen Synthesegenerators (11) weiterhin der Sendeantenne zuzuführen, wobei weiterhin ein vom Sendemodul (SM) örtlich beabstandetes Empfangsmodul (EM) vorgesehen ist, welches zwei empfangsseitige Synthesegeneratoren (23, 24), einen ersten empfangsseitigen Mischer (27) und einen zweiten empfangsseitigen Mischer (28) aufweist, wobei die Vorrichtung dazu eingerichtet ist die Hochfrequenzsignale (F2, F3) der empfangsseitigen Synthesegeneratoren (23, 24) dem ersten empfangsseitigen Mischer (27) zuzuführen, dessen aus diesen beiden Hochfrequenzsignalen erzeugtes Zwischenfrequenzsignal (IF1) der Auswerteeinheit, zuzuführen, wobei die Vorrichtung dazu eingerichtet ist das von der Empfangsantenne (20) empfangene Hochfrequenzsignal (F1') und das vom ersten empfangsseitigen Synthesegenerator (23) erzeugte Hochfrequenzsignal dem zweiten empfangsseitigen Mischer (28) zuzuführen, dessen aus diesen beiden Hochfrequenzsignalen erzeugte Zwischenfrequenzsignal (IF2) der Auswerteeinheit zuzuführen, und
wobei der sendeseitige Synthesegenerator (11) und der zweite empfangsseitige Synthesegenerator (24) dazu eingerichtet sind dieselbe Hochfrequenz zu erzeugen und der erste empfangssseitige Synthesegenerator (23) dazu eingerichtet ist eine hiervon verschiedene Hochfrequenz zu erzeugen.

3. Verfahren unter Verwendung einer Vorrichtung nach einem der vorangehenden Ansprüche, wobei die Transmissions- messstrecke einen Förderer, insbesondere ein Förderband (60), schneidet, oder sich die Transmissionsmessstrecke in einem Behälter oder einem Rohr (65) befindet.

## Claims

1. Device for measuring the dielectric and/or magnetic properties of a sample (P) by means of a microwave transmission measurement, said device comprising:
a transmitting antenna (10) and a receiving antenna (20) which define a transmission measuring section in which the sample (P) to be measured can be positioned;
a transmitting module (SM) comprising two transmitting-side synthesizers (12, 14) each for generating a high-frequency signal (F1, F2) with a frequency between 800MHz and 30GHz and a transmitting-side mixer (16);
a frequency normal (32) connected to the transmitting-side synthesizers (12, 14) via a transmitting-side low-frequency synchronization signal line (34a), to which frequency normal (32) the transmitting-side synthesizers (12, 14) are coupled phase-locked reproducible, and
an evaluation unit being connected to the transmitting-side synthesizers (12, 14) and to the receiving antenna (20) at least indirectly,
wherein the device is configured
to supply the high-frequency signals (F1, F2) of the transmitting-side synthesizers (12, 14) to the transmitting-side mixer (16), to supply the intermediate-frequency signal (IF1), which is generated by the transmitting-side mixer from the two high-frequency signals (F1, F2) to the evaluation unit, and
to supply the high frequency of the first transmitting-side synthesizer (12) to the transmitting antenna,
wherein additionally a receiving module (EM) which is spatially remote from the transmitting module (SM) is provided, said receiving module (EM) comprising a receiving-side synthesizer (22) and a receiving-side mixer (26), wherein the receiving-side synthesizer (22) is connected to the frequency normal (32) via a receiving-side low-frequency synchronization signal line (34b) and is coupled thereto phase-locked reproducible and is additionally coupled to the evaluation unit at least indirectly, and
wherein the device is configured to supply the high-frequency signal (F1') received by the receiving antenna (20) and the high-frequency signal generated by the receiving-side synthesizer (22) to the receiving-side mixer (26), to supply the intermediate-frequency signal (IF2) generated by the receiving-side mixer (26) from the two high-frequency signals to the evaluation unit,
wherein the second transmitting-side synthesizer (14) and the receiving-side synthesizer (22) are configured to generate the same high frequency, and the first transmitting-side synthesizer (12) is configured to generate a high frequency that differs therefrom.

2. A device for measuring the dielectric and/or magnetic properties of a sample (P) by means of a microwave transmission measurement, said device comprising:
a transmitting antenna (10) and a receiving antenna (20) which define a transmission measuring section in which the sample (P) to be measured can be positioned;
a transmitting module (SM) comprising a transmitting-side synthesizer (11) for generating a high-frequency signal (F1) with a frequency between 800MHz and 30GHz;
a frequency normal (32) being connected to the transmitting-side synthesizer (11) via a transmitting-side low-frequency synchronization signal line (34a), to which the transmitting-side synthesizer (11) is coupled phase-locked reproducible, and
an evaluation unit being connected to the transmitting-side synthesizer (11) and to the receiving antenna (20) at least indirectly,
wherein the device is configured to additionally supply the high-frequency signal from the transmitting-side synthesizer (11) to the transmitting antenna,
wherein additionally a receiving module (EM) which is spatially remote from the transmitting module (SM) is provided, said receiving module (EM) comprising two receiving-side synthesizers (23, 24), a first receiving side mixer (27) and a second receiving side mixer (28), wherein the device is configured to provide the high-frequency signals (F2, F3) of the receiving-side synthesizers (23, 24) to the first receiving-side mixer (27), to provide the intermediate-frequency signal (IF1) generated by the first receiving-side mixer (27) from the two high-frequency signals to the evaluation unit,
wherein the device is configured to provide the high-frequency signal (F1') received by the receiving antenna (20) and the high-frequency signal generated by the first receiving-side synthesizer (23) to the second receiving-side mixer (28), to provide the intermediate-frequency signal (IF2) generated by the second receiving-side mixer (28) from these two high-frequency signals to the evaluation unit, and
wherein the transmitting-side synthesizer (11) and the second receiving-side synthesizer (24) are configured to generate the same high frequency, and the first receiving-side synthesizer (23) is configured to generate a high frequency that differs therefrom.

3. Method using a device according to one of the preceding claims, wherein the transmission measuring section intersects a conveyor, in particular a conveying belt (60), or that the transmission measuring section is located inside a container or a pipe (65).

## Revendications

1. Dispositif pour mesurer les propriétés diélectriques et/ou magnétiques d'un échantillon (P) au moyen d'une mesure de la transmission de micro-ondes comprenant :
une antenne d'émission (10) et une antenne de réception (20), lesquelles définissent un chemin de mesure de la transmission, dans lequel l'échantillon (P) à mesurer peut être positionné,
un module d'émission (SM), lequel comprend deux générateurs de synthèse (12, 14) du côté émission pour générer chacun un signal haute fréquence (F1, F2) possédant une fréquence entre 800 MHz et 30 GHz et un mélangeur (16) du côté émission,
une fréquence étalon (32) reliée aux générateurs de synthèse (12, 14) du côté émission au moyen d'une ligne de signal (34a) de synchronisation basse fréquence du côté émission, fréquence étalon sur laquelle les générateurs de synthèse (12, 14) du côté émission sont couplés, verrouillés en phase de manière reproductible, et une unité d'exploitation est reliée au moins indirectement aux générateurs de synthèse (12, 14) du côté émission et à l'antenne de réception (20),
dans lequel
le dispositif est configuré pour
appliquer au mélangeur (16) du côté émission les signaux haute fréquence (F1, F2) des deux générateurs de synthèse (12, 14) du côté émission, appliquer à l'unité d'exploitation le signal de fréquence intermédiaire (IF1) du mélangeur généré à partir de ces deux signaux haute fréquence (F1, F2), et
appliquer en outre à l'antenne d'émission le signal haute fréquence du premier générateur de synthèse (12) du côté émission,
dispositif dans lequel est en outre prévu, espacé du module d'émission (SM), un module de réception (EM) comprenant un générateur de synthèse (22) du côté réception et un mélangeur (26) du côté réception, le générateur de synthèse (22) du côté réception étant relié à la fréquence étalon (32) au moyen d'une ligne de signal (34b) de synchronisation basse fréquence du côté réception et étant couplé à celle-ci, verrouillé en phase de manière reproductible, et en outre relié au moins indirectement à l'unité d'exploitation, et
dans lequel le dispositif est configuré pour
appliquer au mélangeur (26) du côté réception le signal haute fréquence (F1') reçu de l'antenne de réception (20) et le signal haute fréquence généré par le générateur de synthèse (22) du côté réception, appliquer à l'unité d'exploitation le signal de fréquence intermédiaire (IF2) du mélangeur du côté réception, généré à partir de ces deux signaux haute fréquence,
le deuxième générateur de synthèse (14) du côté émission et le générateur de synthèse (22) du côté réception étant configurés de sorte à générer la même haute fréquence, et le premier générateur de synthèse (12) du côté émission étant configuré de sorte à générer une haute fréquence différente de cette dernière.

2. Dispositif pour mesurer les propriétés diélectriques et/ou magnétiques d'un échantillon (P) au moyen d'une mesure de la transmission de micro-ondes comprenant :
une antenne d'émission (10) et une antenne de réception (20), lesquelles définissent un chemin de mesure de la transmission, dans lequel l'échantillon (P) à mesurer peut être positionné,
un module d'émission (SM), lequel comprend un générateur de synthèse (11) du côté émission pour générer chacun un signal haute fréquence (F1) possédant une fréquence entre 800 MHz et 30 GHz,
une fréquence étalon (32) reliée au générateur de synthèse (11) du côté émission au moyen d'une ligne de signal (34a) de synchronisation basse fréquence du côté émission, fréquence étalon sur laquelle le générateur de synthèse (11) du côté émission est couplé, verrouillé en phase de manière reproductible, et
une unité d'exploitation, reliée au moins indirectement au générateur de synthèse (11) du côté émission et à l'antenne de réception (20),
dans lequel
le dispositif est configuré pour
appliquer en outre à l'antenne d'émission le signal haute fréquence du générateur de synthèse (11) du côté émission,
dispositif dans lequel est prévu, espacé du module d'émission (SM), un module de réception (EM) comprenant deux générateurs de synthèse (23, 24) du côté réception, un premier mélangeur (27) du côté réception et un deuxième mélangeur (28) du côté réception, le dispositif étant configuré pour appliquer au premier mélangeur (27) du côté réception les signaux haute fréquence (F2, F3) des générateurs de synthèse (23, 24) du côté réception, appliquer à l'unité d'exploitation le signal de fréquence intermédiaire (IF1) du premier mélangeur, généré à partir de ces deux signaux haute fréquence, et
dans lequel le dispositif est configuré pour
appliquer au deuxième mélangeur (28) du côté réception le signal haute fréquence (F1') reçu de l'antenne de réception (20) et le signal haute fréquence généré par le premier générateur de synthèse (23) du côté réception, appliquer à l'unité d'exploitation le signal de fréquence intermédiaire (IF2) du deuxième mélangeur, généré à partir de ces deux signaux haute fréquence, et
le générateur de synthèse (11) du côté émission et le deuxième générateur de synthèse (24) du côté réception étant configurés de sorte à générer la même haute fréquence, et le premier générateur de synthèse (23) du côté réception étant configuré de sorte à générer une haute fréquence différente de cette dernière.

3. Procédé utilisant un dispositif selon l'une des revendications précédentes, dans lequel le chemin de mesure de transmission coupe un convoyeur, en particulier un convoyeur à bande (60), ou le chemin de mesure de transmission se situe dans un récipient ou un tuyau (65).
